# EUROPEAN PATENT APPLICATION

(11) **EP 4 290 048 A1**
(43) Date of publication of application: **13.12.2023**
(21) Application number: 22750109.5
(22) Date of filing: 04.02.2022
(51) Int. Cl.: E21B 43/16, F25J 3/08, B01D 53/00

(54) **SYSTEM FOR EXTRACTING A HYDROCARBON-CONTAINING FLUID FROM A HYDROCARBON DEPOSIT**

(30) Priority: 08.02.2021 RU 2021102904
(71) Applicant: Zapadinski, Alexei Leonidovich, Moscow, 105064 (RU)
(72) Inventor: Zapadinski, Alexei Leonidovich, Moscow, 105064 (RU)
(74) Representative: Croce, Valeria
(86) International application number: PCT/RU2022/000030
(87) International publication number: WO 2022/169385

(57) **Abstract**

A system for recovery of a hydrocarbon-containing fluid from a hydrocarbon-bearing formation is disclosed. The system comprises a power plant, a carbon dioxide recovery plant, a liquefaction device and an injection device. The power plant comprises an internal combustion engine which is configured to receive a gas separated from the hydrocarbon-containing fluid. The internal combustion engine is configured to operate by combusting the separated gas with air and to discharge an exhaust gas. Moreover, the internal combustion engine is configured to produce a compressed gas-air mixture comprising the separated gas and the air. On top of that, the internal combustion engine is configured to produce the compressed gas-air mixture prior to the combustion. The carbon dioxide separation plant is configured to recover a carbon dioxide-containing constituent of the exhaust gas from the exhaust gas. The liquefaction device is configured to liquefy at least a part of the carbon dioxide-containing constituent so as to produce liquefied carbon dioxide. The injection device is configured to inject the liquefied carbon dioxide into the hydrocarbon-bearing formation through at least one well.

## Description

### FIELD OF THE INVENTION

The invention relates to gas and oil production. Particularly, the invention relates to methods and systems for recovery of hydrocarbons from hydrocarbon-bearing formations, for example, from oil-bearing formations, or, for example, from gas condensate-bearing formations, or, for example, from natural gas-bearing formations.

### BACKGROUND OF THE INVENTION

Injection of noncombustible gases (such as nitrogen, carbon dioxide, exhaust gases, and the like) into hydrocarbon-bearing formations is known for enhancing recovery of a hydrocarbon-containing fluid.

For example, the U.S. Patent No. 4,895,710 proposes a system comprising a combustor chamber, where natural gas is combusted with air compressed by a compressor. After removing carbon dioxide from the exhaust gas in an absorption device, the remaining nitrogen is compressed in an output compressor and is used for injecting into oil and gas wells. The heat released by the combustion is used to produce mechanical work by a heat exchanger, a steam boiler and a steam turbine. However, significant energy consumption is required to pressurize nitrogen for injecting it into a hydrocarbon-bearing formation. Moreover, this system does not provide effective usage of a gas that is separated from the hydrocarbon-containing fluid.

The U.S. Patent No. 10,315,150 shows a system where a hydrocarbon-containing fuel gas is combusted with an oxygen-containing oxidant in a power plant. Carbon dioxide is recovered from the exhaust gas, therewith obtaining solid carbon dioxide by using a freezing chamber. The solid carbon dioxide is melted in a melting chamber to produce liquid carbon dioxide. Then, the liquid carbon dioxide is transformed into gaseous carbon dioxide, which is used for enhanced oil recovery. However, significant energy consumption is required to compress the gaseous carbon dioxide for injecting it into a hydrocarbon-bearing formation. Moreover, this system does not provide effective usage of a gas that is separated from the hydrocarbon-containing fluid.

At the same time, the injection of a noncombustible gas into a hydrocarbon-bearing formation is inseparably connected with a significant increase in the noncombustible gas concentration in the gas separated from the hydrocarbon-containing fluid (see Balint V., Ban A., Doleshal Sh., et al. Use of carbon dioxide in oil recovery. M.: Nedra, 1977, p. 221, p. 232; Schedel R.L. EOR + CO₂ = A gas processing challenge // Oil and Gas Journal, 1982, Vol. 80, No. 43, Oct. 25, p. 158, p. 163-166). The significant increase in the noncombustible gas concentration in the gas separated from the hydrocarbon-containing fluid is caused by the noncombustible gas breakthrough into production wells. For example, the carbon dioxide concentration in the produced associated gas can increase up to the levels of 90% after a period of 6 months of carbon dioxide injection into an oil-bearing formation. (see Schedel R.L. EOR + CO₂ = A gas processing challenge // Oil and Gas Journal, 1982, Vol. 80, No. 43, Oct. 25, p. 158, p. 163-166).

The presence of the inert gas (noncombustible gas) in the gas separated from the hydrocarbon-containing fluid worsens the quality, decreases the heating value and an ability of the gas separated from the hydrocarbon-containing fluid to burn will deteriorate. Accordingly, using the gas separated from the hydrocarbon-containing fluid as fuel will be quite difficult.

Systems for recovering hydrocarbons are known, in which the gas diluted with the noncombustible gas is combusted with an oxygen-enriched oxidant.

The RU Patent No. 2,038,467 describes a system comprising a power plant and an injecting device (in the form of a compression unit). The known power plant comprises a steam turbine and a steam boiler, where associated gas is combusted with an artificial oxygen-containing oxidant (which comprises oxygen, carbon dioxide and water vapor) so as to produce the carbon dioxide for injecting into a hydrocarbon-bearing formation. However, significant energy consumption is required to produce oxygen in an air separation plant. The air separation plant has a high cost, and the power plant comprising the steam turbine and the steam boiler has low energy characteristics. Besides that, during the combustion with the artificial oxygen-containing oxidant, a significant part of the produced carbon dioxide mixes with water thus forming carbonized water, the injection of which is less effective for recovery of hydrocarbons from the hydrocarbon-bearing formation in comparison with the carbon dioxide injection.

The U.S. Patent No. 4,344,486 describes a system comprising a steam boiler, a device for energy generation and an injection device. As it is described in the U.S. Patent No. 4,344,486, a gas mixture recovered from an underground formation is combusted with an oxygen-enriched gas to form a concentrated carbon dioxide stream which is injected into an underground petroleum formation. However, significant energy consumption is required to produce oxygen. At the same time, the oxygen production has a great cost. Moreover, a significant amount of energy is consumed to compress the concentrated carbon dioxide stream for the injection into the underground petroleum formation.

Also, systems for recovering hydrocarbons are known, wherein technical solutions on increasing the heating value of a gas separated from the hydrocarbon-containing fluid are used in order to carry out the combustion, when that gas is diluted with a noncombustible gas.

The article (Hlozek R.J. "Engine-Exhaust Gas Offers Alternative for EOR" Oil and Gas Journal, Apr. 1, 1985, p.p. 75-78) describes production of an exhaust gas in gas engines for injecting into an oil-bearing formation. Methane is combusted in gas engines for the exhaust gas production. It is noted that a hydrocarbon-containing fluid is recovered from an oil-bearing formation and is separated into gas and oil, and wherein the gas separated from the hydrocarbon-containing fluid could be used as a fuel. Together with this, the author declares, that when the heating value of the gas separated from the hydrocarbon-containing fluid becomes lower than 950 BTU/cu ft (i.e., lower than the heating value of methane), nitrogen and carbon dioxide are removed from the gas separated from the hydrocarbon-containing fluid, in order to use this gas as the fuel for gas engines. This causes the necessity of the nitrogen and carbon dioxide removal practically throughout the whole project, which will require significant energy consumption and additional expenses for purchase and maintenance of expensive equipment. Moreover, significant energy consumption is necessary to compress the exhaust gas for injecting it into the hydrocarbon-bearing formation.

Bleakley W.B. in his article describes the system that provides the injection of flue gases into an oil-bearing formation. A gas stream is separated from an oil-containing fluid recovered from the oil-bearing formation. The gas separated from the oil-containing fluid is mixed with ethane and propane to increase the heating value. Then the gas separated from the oil-containing fluid is combusted in a power plant comprising steam boilers and a steam turbine, thus obtaining the flue gases (Bleakley W.B., "Block 31 Miscible Flood Remains Strong," Petroleum Engineer International, Nov., 1982, p.p. 84, 86, 90, 92). The steam turbine drives a compressor that compresses the flue gases for injecting into the oil-bearing formation. In this system, combustible substances (ethane and propane) having a high heating value and high cost are combusted. Also, a significant amount of energy is consumed to compress the flue gases during the injection into the oil-bearing formation. The power plant produces only a part of energy needed for compressing the flue gases. By using the energy produced in the power plant, the flue gases are compressed up to 1200 psi (the required pressure is 4200 psi).

The closest to the proposed system in technical essence and achievable result is the system described in the U.S. Patent No. 7,299,868, wherein the system for recovery of a hydrocarbon-containing fluid from a hydrocarbon-bearing formation comprises a power plant and an injection device for injecting the exhaust gas into the hydrocarbon-bearing formation. The power plant comprises an internal combustion engine adapted to operate by combusting a gas separated from the hydrocarbon-containing fluid, wherein said engine is adapted to produce a compressed gas-air mixture (that comprises air and the gas separated from the hydrocarbon-containing fluid) prior to the combustion. In this system, the necessity for using oxidants specifically produced for combusting the gas separated from the hydrocarbon-containing fluid is absent.

However, disadvantages of the combustion of the compressed gas-air mixture are the process instability and detonation taking place. This is caused by the fact that the gas separated from the hydrocarbon-containing fluid has a low value of the Methane number which indicates a measure of resistance of a fuel gas to detonation. As a result, the internal combustion engine of this system can operate only at reduced power. Thus, the steady operation of gas engines on the gas separated from the hydrocarbon-containing fluid, for example, such as the associated gas, can be carried out only at a power of 60-70% of the rated power (see Ivanov S. S., Tarasov M. Yu. Requirements for the associated gas treatment for gas-fuelled piston engines supply. Neftianoye khozyastvo, No. 1, p.p. 102-105). Accordingly, an amount of energy produced by the power plant will decrease.

The U.S. Patent No. 7,299,868 describes that a part of the exhaust gas may be added to the gas separated from the hydrocarbon-containing fluid to enhance the detonation characteristic, which is the dependence between the critical ignition advance (wherein the critical ignition advance is the ignition advance at the detonation beginning) and the rotation speed of the engine. However, the addition of the exhaust gas to the gas separated from the hydrocarbon-containing fluid does not provide an increase in the Methane number for the gas separated from the hydrocarbon-containing fluid, due to a significant presence of nitrogen in the exhaust gas. Moreover, the addition of the exhaust gas to the gas separated from the hydrocarbon-containing fluid causes a decrease in the Methane number for the gas separated from the hydrocarbon-containing fluid. For example, the Methane number of the associated gas (which comprises 75 vol. % of methane, 20 vol. % of ethane, and 5 vol. % of propane), when diluting it by 25 vol. % with the exhaust gas (which comprises 88 vol. % of nitrogen and 12 vol. % of carbon dioxide), decreases by more than 40 % (calculations were carried out using the formulas quoted in the work Ivanov S. S., Tarasov M. Yu. Requirements for the associated gas treatment for gas-fuelled piston engines supply. Neftianoye khozyastvo, No. 1, p.p. 102-105). Such decrease in the Methane number of the associated gas causes a significant decrease in power (and energy) produced by the internal combustion engine. For example, when the Methane number decreases from 70 to 40 (approximately by 40 %), the power of a gas turbine engine falls from 95 % to 55 % (Verevkin A.P., Seleznev S.B. Utilization of associated petroleum gas based power generation: problems and solution. Neftegazovoe delo, 2015, vol. 13, No. 1, p.p. 56-62).

Accordingly, the injection of the exhaust gas containing nitrogen and carbon dioxide into a hydrocarbon-bearing formation does not cause an increase in the Methane number for the gas separated from the hydrocarbon-containing fluid, but, on the contrary, leads mainly to a decrease in the Methane number of the gas separated from the hydrocarbon-containing fluid.

The U.S. Patent No. 7,299,868 does not offer any technical solutions to remove this disadvantage. The U.S. Patent No. 7,299,868 offers, when preparing the exhaust gas for the injection, to reduce the nitrogen concentration in the exhaust gas depending on geological-geophysical characteristics of the hydrocarbon-bearing formation. As is well known, this results in enhanced recovery of liquid hydrocarbons. However, the reduction in the nitrogen concentration, especially, an obtainment of a low nitrogen concentration in the exhaust gas, requires significant energy consumption. The reason for this is that, for reducing the nitrogen concentration, it is necessary to extract nitrogen, which has low chemical activity, from the exhaust gas. Accordingly, in order for extracting nitrogen from exhaust gas, it is required to produce ultra-low temperatures, for example, using the cryogenic technique, or, in order for extracting nitrogen from the exhaust gas, it is necessary to significantly increase the exhaust gas pressure, for example, so as to use the membrane technologies.

The reduction in nitrogen concentration in the injected exhaust gas depending on the geological-geophysical characteristic of a hydrocarbon-bearing formation leads to increasing and setting a desired partial pressure of carbon dioxide in the injected exhaust gas in order to improve, in that formation, an interaction of the carbon dioxide with formation fluids, primarily for dissolving the carbon dioxide in those fluids. Solubility of carbon dioxide in oil is 6-8 times higher than solubility of nitrogen (see, for example, Kachmar Yu. D., Yaniv V. E., Rybchak E. V., Zinchuk N. S. Use of Nitrogen in Oil recovery. M.: VNIIONG, 1973, p. 3; Balint V., Ban A., Doleshal Sh., et al. Use of carbon dioxide in oil recovery. M.: Nedra, 1977, p. 16). Accordingly, when filtering the injected exhaust gases through the formation, carbon dioxide is predominantly dissolved in the formation fluids, while the majority of nitrogen breaks through into production wells, and only a minor part is dissolved in the formation fluids. This does not increase, but, on the contrary, leads predominantly to reduction in the Methane number for the gas separated from the hydrocarbon-containing fluid.

The low value of the Methane number determines the internal combustion engine run at a reduced power, which leads to reducing an amount of energy (and, accordingly, an amount of the exhaust gas for the injection) produced by the power plant. It should also be noted that significant energy consumption is required for compressing in order to inject the exhaust gas into the hydrocarbon-bearing formation. Moreover, the exhaust gas injection does not provide considerable increasing the liquid hydrocarbon recovery.

The U.S. Patent No. 10,976,295 notes that the removal of ethane or heavier hydrocarbons from natural gas provides an increase in the Methane number.

The combination of the systems described in the U.S. Patents No. 7,299,868 and No. 10,976,295 provides the increase in the Methane number of the gas separated from the hydrocarbon-containing fluid. However, the combination of said systems requires additional expensive equipment, and does not remove disadvantages of the system described in the U.S. Patent No. 7,299,868, such as significant energy consumption to compress the exhaust gas for injecting it into the hydrocarbon-containing formation, and relatively low increasing the liquid hydrocarbon recovery. Moreover, the removal of ethane and heavier hydrocarbons from the gas separated from the hydrocarbon-containing fluid will reduce the internal combustion engine parameters. This is because the heating value of the gas separated from the hydrocarbon-containing fluid is relatively low due to the fact that the gas separated from the hydrocarbon-containing fluid is diluted with the noncombustible gas. And the removal of ethane and heavier hydrocarbons will decrease the heating value of the gas separated from the hydrocarbon-containing fluid even more.

Thus, the present invention discloses a system for recovery of a hydrocarbon-containing fluid from a hydrocarbon-bearing formation, where the disadvantages and deficiencies of known systems are overcome.

It is an object of the present invention to provide enhanced recovery of liquid hydrocarbons, decreasing energy consumption for the injection, raising power generation and increasing energy production.

Another object of the present invention is to provide injection of liquefied carbon dioxide into a hydrocarbon-bearing formation so as to improve the quality of a gas, which is separated from a hydrocarbon-containing fluid recovered from the hydrocarbon-bearing formation, and which is to be used in the process of combustion with air in a internal combustion engine configured to produce the compressed gas-air mixture prior to the combustion.

It is still another object of the present invention to provide the production of the liquefied carbon dioxide from the exhaust gas without the use of expensive equipment and the decrease in energy consumption for the injection process into the hydrocarbon-bearing formation due to the injection of the liquefied carbon dioxide.

It is still another object of the present invention to provide the efficient power generation from the gas separated from the hydrocarbon-containing fluid without emitting the carbon dioxide into the environment.

These and other objects, features and advantages of the present invention will undoubtedly become apparent to those skilled in the art from the following description, figures and claims.

Terms listed below have the following meaning in the description and claims.

The term "fluid" refers to: 1) a substance that is able to flow; or 2) a substance combination (for example, a mixture or a solution) that is able to flow. Example of a fluid may be a gas, or a liquid, or a gas-liquid mixture, or a solution in the form of a liquid with a dissolved gas. Herewith, the fluid may contain inclusions, such as solid particles, for example, rock particles. An example of a hydrocarbon-containing fluid may be oil; or crude oil in which is dissolved a gas (which comprises at least one gaseous hydrocarbon and may comprise at least one noncombustible gas, for example, such as carbon dioxide, nitrogen, or the like); or a mixture comprising gas condensate and a gas (which comprises at least one gaseous hydrocarbon and may comprise at least one noncombustible gas, for example, such as carbon dioxide, nitrogen, or the like). Another example of a hydrocarbon-containing fluid is natural gas. An example of a hydrocarbon-containing fluid may be a mixture (for example, in the form of an emulsion) comprising oil, water and gas. One more example of a hydrocarbon-containing fluid may be a mixture comprising gas condensate, a gas and water. Other examples of a hydrocarbon-containing fluid are possible. The term "hydrocarbon-containing fluid", the term "fluid containing hydrocarbons", and the term "fluid containing a hydrocarbon" are interchangeable, any of these terms refers to a fluid comprising at least one hydrocarbon.

The term "gas" and the term "vapor" are interchangeable, any of these terms refers to: 1) a substance in the gaseous state or a mixture of substances in the gaseous state; or 2) a substance at a temperature higher than the critical temperature (for this substance) and at a pressure higher than the critical pressure (for this substance), if the density of this substance at said temperature and said pressure has a value not more than the maximal value of the density of this substance in the gaseous state; or 3) a mixture of substances at a temperature that is higher than the critical temperature for at least one substance of this mixture and at the set (or determined) pressure, if the density of this mixture at said temperature and said pressure takes a value not more than the maximal value of the density of this mixture under conditions when all substances of this mixture are in the gaseous state.

The term "liquid" refers to: 1) a substance in the liquid state; or 2) a solution in which a substance being the solvent in this solution is in the liquid state; or 3) a mixture of substances any of which is in the liquid state or is dissolved in a substance being in the liquid state; or 4) a substance at a temperature higher than the critical temperature (for this substance) and at a pressure higher than the critical pressure (for this substance), if the density of this substance at said temperature and said pressure has a value not less than the minimal value of the density of this substance being in the liquid state; or 5) a solution (i.e., a homogeneous mixture) at a temperature that is higher than the critical temperature for a substance being the solvent in this solution and at the set (or determined) pressure, if the density of this solution at said temperature and said pressure takes a value not less than the minimal value of the density of this solution under conditions when said substance (that is the solvent) is in the liquid state; or 6) a mixture of substances at a temperature that is higher than the critical temperature for at least one substance of this mixture and at the set (or determined) pressure, if the density of this mixture at said temperature and said pressure takes a value not less than the minimal value of the density of this mixture under conditions when each substance of this mixture is in the liquid state or is dissolved in the substance being in the liquid state.

Except for the cases (and conditions) mentioned in the disclosure of the terms "gas" and "liquid", the term "supercritical fluid" refers to a substance in the supercritical state (i.e., the pressure and temperature of this substance are higher than the critical values for this substance) or a mixture of substances, at least one of which substances being in the supercritical state.

The term "hydrocarbon" refers to an organic compound consisting only of hydrogen and carbon atoms. An example of a hydrocarbon may be methane, or, e.g., ethane, or, e.g., hexane, or, e.g., octene, or, e.g., decane, or a similar substance.

The term "carbon dioxide" refers to the substance having the chemical formula CO₂.

The term "the liquefied carbon dioxide" refers to: 1) a liquid that is obtained as a result of liquefying at least a part of a gas (or at least a part of a supercritical fluid) comprising carbon dioxide, and wherein said liquid consists of carbon dioxide; or 2) a liquid that is obtained as a result of liquefying at least a part of a gas (or at least a part of a supercritical fluid) comprising carbon dioxide, and wherein said liquid comprises carbon dioxide and at least one substance dissolved in the carbon dioxide. That is, liquefied carbon dioxide comprises carbon dioxide and may comprise, for example, at least one of the following substances: nitrogen, oxygen, water, and the like.

The term "formation" refers to any region (or body of rock) that is under the Earth surface and may be characterized by at least one feature absent in a neighboring region (or body of rock). Such a feature may be, e.g., a rock characteristic, or, e.g., the presence of hydrocarbons. The formation comprising at least one of hydrocarbon will be called as a "hydrocarbon-bearing formation". An example of a hydrocarbon-bearing formation may be, e.g., an oil-bearing formation. Another example of a hydrocarbon-bearing formation may be, e.g., a gas-bearing formation. One more example of a hydrocarbon-bearing formation may be, e.g., a gas-condensate-bearing formation. A formation could have a reservoir (or several reservoirs), where porous and permeable rock body contains a fluid. A formation could contain, for example, sedimentary rocks, or magmatic rocks, or metamorphic rocks, or combinations thereof, and, for example, water, hydrocarbons, or other substances, or any combination thereof.

The term "separator" refers to any device (or a plant, or an apparatus, or an installation, or any combination thereof, or the like) for separating a gas from a hydrocarbon-containing fluid. A separator may be, e.g., a two-phase separator (wherein gas is separated from liquid), or, e.g., a three-phase separator (wherein a hydrocarbon-containing fluid may be separated into gas and liquids which may be separated into liquid hydrocarbons and water). A separator may be mounted, e.g., at the Earth surface (herewith, the Earth surface may be land or water), or, e.g., in a well. A separator mounted in a well may be such as a bottom-hole separator. The gas anchor is also a separator. Moreover, for example, a device for obtaining gas from the annular space of a well is also a separator.

The term "power plant" refers to: 1) a device capable of generating energy, or 2) an equipment combination capable of generating energy. A power plant may produce, for example, mechanical energy, or electrical energy, of thermal energy (that is heat), or any combination of these energy types. For example, a power plant may comprise an internal combustion engine for generating mechanical energy. For example, in order for generating electrical energy, an internal combustion engine and an electrical generator may be included in a power plant, wherein the electrical generator shaft is connected with the internal combustion engine shaft by a coupling (or by a belt drive, or by a gear train, or the like). A heat exchanger for heating a heat-transfer fluid (e.g., water) may, for example, be connected to a cooling apparatus of the internal combustion engine so as to generate thermal energy in the power plant. A waste-heat boiler may be installed in the power plant to generate thermal energy, wherein heat (that is thermal energy) is transferred from the exhaust gas to a heat-transfer fluid e.g., water. A power plant that generates simultaneously electrical energy and thermal energy is sometimes called as a cogeneration plant (or a cogeneration station), or a combined plant (or a combined station), or a combination cycle plant (or a combined cycle station), or a combined heat and power plant (or a combined heat and power station), or the like. The term "power plant" is interchangeable with any of the following terms: "power station", or "generating station", or "generating plant", or the like. Examples of a power plant in various embodiments are a gas turbine power plant, a gas turbine power station, a reciprocating engine power plant, an engine power plant, an electric power plant, and the like.

The term "gas engine" refers to an internal combustion engine that operates on a gaseous fuel. The term "gas engine" is interchangeable with any of the following terms: "gaseous-fuelled engine", or "natural gas-fuelled engine", or "natural gas engine", or the like. The term "gas engine" is not used to denote a gas turbine engine. Preferably the term "gas engine" is used to denote a piston internal combustion engine (such an engine is also called a reciprocating internal combustion engine) that operates on a gaseous fuel. An example of a gas engine is any piston internal combustion engine that operates on a gaseous fuel, and in which mechanical energy is generated by reciprocating movement of a piston (pistons) within a cylinder (cylinders) as a result of the expansion of combustion products. Or an example of a gas engine may be a rotary internal combustion engine (e.g., a Wankel engine) that operates on a gaseous fuel. A gas engine may be, for example, realized with the spark ignition of a mixture of gaseous fuel and oxidant (e.g., such as air) in a combustion chamber, or, for example, with a precombustion-chamber ignition of a mixture of gaseous fuel and oxidant (e.g., air), or, for example, with the laser ignition of a mixture of gaseous fuel and oxidant (e.g., such as air). In order for denoting a gas engine with the spark ignition, terms may be used such as: "natural gas fuelled spark ignition engine" or "natural gas fuelled spark-ignited engine". A gas engine may also be realized with igniting a mixture of gaseous fuel and oxidant (e.g., such as air) by injecting a small portion of a liquid fuel into a cylinder in the end of the compression stroke (the gas engine with igniting by a liquid fuel is also called as a gas-diesel engine or a dual-fuel engine).

The term "gas turbine engine" refers to an internal combustion engine that operates on a gaseous fuel and that includes a turbine which is capable to be driven by the expanding the combustion products of a gaseous fuel. The term "gas turbine" is sometimes used in the technical literature to denote a gas turbine engine. However, when using the term "gas turbine engine", the term "gas turbine" may be used for denoting a turbine being a part of a gas turbine engine.

The term "air" refers to an oxygen-containing gas. Preferably, the term "air" is used in regard to the gaseous mixture forming the Earth atmosphere or a similar gaseous mixture. For example, the term "air" is used for denoting a gaseous mixture containing about 20 to 25 vol. % of oxygen and about 75 to 80 vol. % of nitrogen. In addition to oxygen and nitrogen, said gaseous mixture (that is air) may contain water (for example, in the form of water vapor), or argon, or carbon dioxide, or other substances, or any combination thereof.

The term "exhaust gas" refers to a gaseous mixture that is formed during the combustion process. The term "exhaust gas" is interchangeable with any of the following terms: "off-gases", "off-gas", "exhaust gases", "flue gas", "flue gases", and the like. An example of an exhaust gas is the gaseous mixture formed during the combustion of a gaseous fuel with an oxidant. Air may be used as the oxidant. The exhaust gas resulting from the combustion of a gaseous fuel with air comprises nitrogen, carbon dioxide, water, if the gaseous fuel contains at least one hydrocarbon. Besides said substances, the exhaust gas may comprise oxygen, nitrogen oxides, soot, solid particles, unburned hydrocarbons, sulfur-containing substances, carbon monoxide, and the like.

The term "inert gas" refers to any noncombustible gas. The terms "inert gas" and "noncombustible gas" are interchangeable. An example of an inert gas is any gas from the following: nitrogen, carbon dioxide, exhaust gas, argon, water vapor, any mixture of said gases, and the like.

The term "moisture" refers to water drops, or water vapor, or both.

The term "carbon-dioxide-containing constituent of the exhaust gas" refers to any of the exhaust gas constituents where the concentration of carbon dioxide is higher than in the exhaust gas. A carbon-dioxide-containing constituent of an exhaust gas is produced by recovering from the exhaust gas. "Recovering a carbon-dioxide-containing constituent of the exhaust gas" is the same as "separating a carbon-dioxide-containing constituent of the exhaust gas" or "extracting a carbon-dioxide-containing constituent of the exhaust gas". The carbon-dioxide-containing constituent of the exhaust gas may consist only of the carbon dioxide. The concentration of carbon dioxide in the carbon-dioxide-containing constituent of the exhaust gas may also be, for example, about 50 %, or about 70 %, or about 90 %, or about 95 %, or about 99.5 %, or more. In addition to carbon dioxide, the carbon-dioxide-containing constituent of the exhaust gas may comprise, for example, at least one substance such as nitrogen, water, oxygen, and others. The term "carbon-dioxide-containing constituent" is the abridged version of the term "carbon-dioxide-containing constituent of the exhaust gas". The term "carbon-dioxide-containing constituent" and the term "constituent containing carbon dioxide" are interchangeable. Various terms may be used to denote the carbon-dioxide-containing constituent and a concentration of carbon dioxide in the carbon-dioxide-containing constituent. For example, in order for denoting the carbon-dioxide-containing constituent that comprises, for example, 90 % of carbon dioxide, the term "carbon dioxide purity" of 90 % or "carbon dioxide having a purity" of 90 % may be used.

The term "carbon dioxide separation plant" refers to a device (or an equipment combination), in which a carbon-dioxide-containing constituent of a gaseous mixture is recovered from said mixture. For example, a carbon-dioxide-containing constituent of an exhaust gas may be recovered from the exhaust gas in a carbon dioxide separation plant. The concentration of carbon dioxide in the carbon-dioxide-containing constituent of the exhaust gas depends on technique for recovery of the carbon-dioxide-containing constituent from the exhaust gas, process parameters (and characteristics) of the recovery technology, the exhaust gas composition, and the like.

The term "liquefaction device" refers to a device (or an equipment combination), in which at least one substance is liquefied, i.e., in which at least one substance is converted into a liquid. For example, a gas (or a supercritical fluid) is converted to a liquid by changing the pressure, or the temperature, or both in a liquefaction device. Or, for example, if a gas (or a supercritical fluid) comprises several substances, a liquid comprising at least one of said substances may be produced by changing the pressure, or the temperature, or both in a liquefaction device. In other words, in this case, at least a part of said gas (or at least a part of said supercritical fluid) is converted into the liquid comprising at least one of said substances.

The term "injection device" refers to any device (or an equipment combination) that injects a gas, or a liquid, or a supercritical fluid, or any combination thereof.

The term "well" refers to the deep hole which is maid (for example, drilled) in the ground and through which a fluid may flow from the formation to the Earth surface, or from the Earth surface to the formation, or both. The Earth surface may be a land or water.

The term "production well" refers to a well, through which a hydrocarbon-containing fluid is recovered from a hydrocarbon-bearing formation. Moreover, any fluid (or fluids) may be injected into the hydrocarbon-bearing formation through the production well.

The term "injection well" refers to a well, through which a fluid (or fluids) is injected into a hydrocarbon-bearing formation. An example of the fluid that may be injected into the hydrocarbon-bearing formation through an injection well is e.g., gas, or, e.g., water, or, e.g., liquefied carbon dioxide, or the like. Moreover, a hydrocarbon-containing fluid may be recovered from the hydrocarbon-bearing formation through the injection well.

The term "separated gas" refers to a gas that is separated from a hydrocarbon-containing fluid. In other words, the term "separated gas" is an abridged version of the term "gas separated from a hydrocarbon-containing fluid". The term "separated gas" and the term "gas separated from a hydrocarbon-containing fluid" are interchangeable.

The term "heavy hydrocarbon" is used for denoting a hydrocarbon having two or more carbon atoms in each molecule. An example of a heavy hydrocarbon is, e.g., ethane, or, e.g., propane, or, e.g., butane, or, e.g., hexane, or, e.g., octene, or, e.g., decane, and the like.

The term "gaseous hydrocarbon" refers to a hydrocarbon having not more than four carbon atoms in each molecule. An example of a gaseous hydrocarbon is, e.g., methane, or, e.g., ethane, or, e.g., propane, or, e.g., butane, and the like.

The term "liquid hydrocarbon" is used for denoting a hydrocarbon having five or more carbon atoms in each molecule. An example of a liquid hydrocarbon is pentane, or, e.g., hexane, or, e.g., octane, or, e.g., decane, and the like.

Any of the following terms: "containing", "contain", "comprising", "comprise", "having", "have", "include", "including", as well as any of derivatives thereof is inclusive (i.e., open) and does not exclude additional, not listed elements or actions.

The conjunction "and/or" reflects the meaning of both the conjunction "and" and the conjunction "or", and herewith shows that two situations exist either together, or as an alternative to each other. In other words, the conjunction "and/or" shows to the possibility of presence of all (two) subjects (or features, or actions, or elements, or possibilities, and so on) indicated on either side of the conjunction "and/or", as well as of one (any) of two subjects (or features, or actions, or elements, or possibilities, or so on) indicated on either side of the conjunction "and/or".

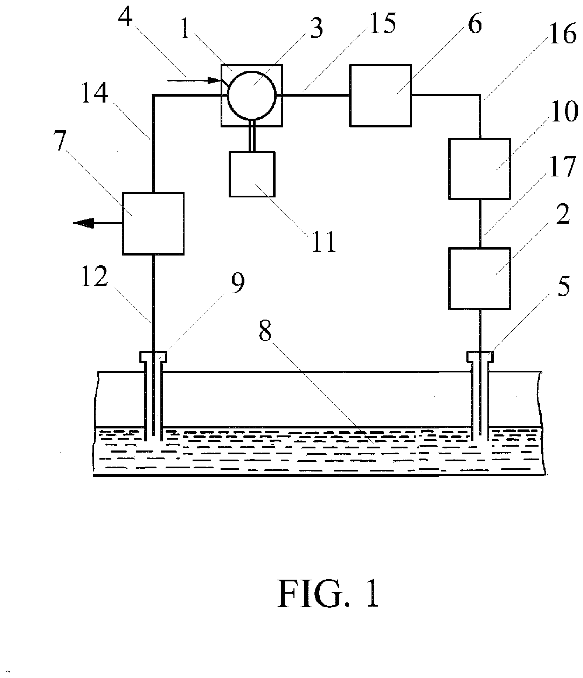

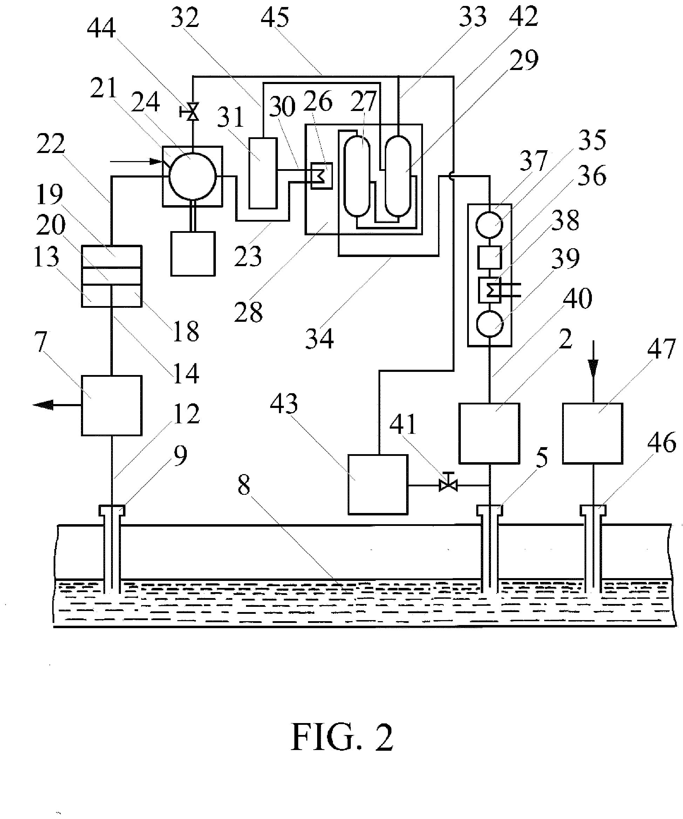

The presented definitions of the terms and the presented examples are not limiting. The meanings of the presented terms and presented examples are added and explained in the description and at the Figures (Fig. 1 and Fig. 2) illustrating the proposed system, as well as by the widest definition contained in at least one publication or patent. Moreover, the disclosure of the invention is not limited by the terms given in the description and the claims. All synonyms of these terms, equivalents thereof, new developments and technical solutions that serve the same or analogous purpose are considered to be included in the scope of the claims.

### SUMMARY OF THE INVENTION

The objects of this invention can be attained by the proposed system. The proposed system for recovery of a hydrocarbon-containing fluid from a hydrocarbon-bearing formation comprises:
a power plant comprising an internal combustion engine configured to receive a gas separated from the hydrocarbon-containing fluid, wherein the internal combustion engine is configured to operate by combusting the separated gas with air and configured to produce a compressed gas-air mixture comprising the separated gas and the air, and wherein the internal combustion engine is configured to produce the compressed gas-air mixture prior to the combustion and configured to discharge an exhaust gas;
a carbon dioxide separation plant configured to recover a carbon-dioxide-containing constituent of the exhaust gas from the exhaust gas;
a liquefaction device configured to liquefy at least a part of the carbon-dioxide-containing constituent so as to produce liquefied carbon dioxide; and an injection device configured to inject the liquefied carbon dioxide into the hydrocarbon-bearing formation through at least one well.

The injection of the liquefied hydrocarbon dioxide into the hydrocarbon-bearing formation (further, the term "formation" may be used, to abridge notation of the term "hydrocarbon-bearing formation") allows to increase the production of liquid hydrocarbons, and moreover, provides an increase in the quality of the separated gas which is to be used in the process of combustion with air in the internal combustion engine configured to produce the compressed gas-air mixture prior to the combustion.

This increase in the quality is related to the increase in the Methane number of the separated gas, and is determined by the following. The injection of the highly concentrated carbon dioxide (such as the liquefied carbon dioxide) into the formation leads to an increase in the carbon dioxide concentration in the separated gas. The increase in the carbon dioxide concentration in the separated gas causes a decrease in the combustion temperature of the separated gas, and a decrease in the nitrogen concentration in the compressed gas-air mixture. Accordingly, the forming of nitrogen oxides, which reduce the activation energy for high-temperature ignition, is reduced. This results in an increase in the resistance of the separated gas to detonation and, accordingly, an increase in the Methane number of the separated gas. The calculations show that the Methane number of the separated gas increases when the carbon dioxide concentration increases in the separated gas (the calculation are carried out using the formulas presented in the works: Kubesh J., King S. R., Liss W. E. Effect of Gas Composition on Octane Number of Natural Gas Fuels. SAE Paper 922359; Ivanov S. S., Tarasov M. Yu. Requirements for the associated gas treatment for gas-fuelled piston engines supply. Neftianoye khozyastvo, No. 1, p.p. 102-105). For example, the Methane number of the associated gas (which comprises 75 vol. % of methane, 20 vol. % of ethane, and 5 vol. % of propane), when diluting it by 25 vol. % with the carbon dioxide, increases by more than 50 %. The increase in the Methane number of the separated gas provides an increase in the power (accordingly, the amount of energy) generated by the internal combustion engine and a possibility for generating the maximum power (that is the rated power) by the internal combustion engine.

Nitrogen breakthrough into production wells does not occur due to the high concentration of carbon dioxide and, accordingly, the low concentration of nitrogen (and other exhaust gas substances) in the liquefied carbon dioxide that is injected into the formation. The liquefied carbon dioxide production is carried out by recovering the carbon-dioxide-containing constituent from the exhaust gas, and by liquefying at least a part of the carbon-dioxide-containing constituent. As a result, there is no necessity to use expensive equipment for the recovery of highly concentrated carbon dioxide from the exhaust gas.

The high concentration of carbon dioxide and the low concentration of nitrogen in the liquefied carbon dioxide are caused by a low solubility of nitrogen in liquid carbon dioxide. The solubility of nitrogen in liquid carbon dioxide is significantly lower than the solubility of nitrogen in oil. For example, under conditions of vapor-liquid equilibrium of the "liquid carbon dioxide + nitrogen" system at a temperature about 303.156 K (30.006 °C) and a pressure about 7.4035 MPa, the carbon dioxide mole fraction in the liquid phase reaches 0.9945 (see Westman S. F., et al. Vapore-liquid equilibrium data for the carbon dioxide and nitrogen (CO2 + N2) system at the temperatures 223, 270, 298 and 303 K and pressures up to 18 MPa. Fluid Phase Equilibria, V. 409, 15 February 2016, pages 207-241).

The injection of the liquefied carbon dioxide into the formation provides an increase in the liquid hydrocarbon production not only due to the fact that a high concentration of carbon dioxide (which is highly soluble in liquid hydrocarbons) is achieved in the liquefied carbon dioxide. Thus, if the formation temperature is less (or higher by a determined value) than the critical temperature of the carbon dioxide, then, due to significant formation pressures (that usually exceed the critical pressure of the carbon dioxide), a displacement of formation fluids by the liquefied carbon dioxide is achieved. The density of the liquefied carbon dioxide is comparable to the density of formation fluids. Therefore, in the given conditions between the formation fluids and carbon dioxide, the gravity segregation is absent. If the formation temperature is higher than the critical temperature of carbon dioxide, and a certain increase in the carbon dioxide temperature takes place during filtration in the formation, then the carbon dioxide volume will increase significantly and a part of carbon dioxide at the displacement front will be enriched by hydrocarbons. As a result, during the filtration, there is a significant increase in the volume of the carbon dioxide enriched in hydrocarbons due to the carbon dioxide having a high volume thermal expansion coefficient at the temperature and pressure values higher than the critical values. For example, at the pressure of 150 bar, the carbon dioxide volume increases more than twice with rising a temperature from 305 K to 360 K (the calculations are carried out using data of the work: Altunin V.V. Thermodynamic properties of carbon dioxide. M.: Publishing House "Standartov", 1975, p. 347). With this increase in the volume of the carbon dioxide enriched in hydrocarbons, the size of the zone of carbon dioxide enriched in hydrocarbons increases significantly at the displacement front, that promotes a forming of the miscible zone which properties being close to the properties of the formation fluid. Accordingly, the stability of the displacement front increases.

Moreover, since the proposed system provides the liquefaction of at least a part of the carbon-dioxide-containing constituent for producing the liquefied carbon dioxide, then when the liquefied carbon dioxide is injected into the formation, energy for compression is not consumed. Energy consumption for producing the liquefied carbon dioxide and for injecting the liquefied carbon dioxide (for example, by a pump) is significantly less in comparison with energy consumption for compression up to the pressure for injecting the same amount of carbon dioxide in the gaseous state into the formation. For example, if the pressure of the carbon-dioxide-containing constituent after recovering it from exhaust gas is 0.1 MPa, and the injection pressure is 30 MPa, then the energy consumption for producing the liquefied carbon dioxide and for injecting the liquefied carbon dioxide into the hydrocarbon-bearing formation would be less by approximately 40 % in comparison with the energy consumption for compression for the injection of the same amount of carbon dioxide in the gaseous state.

Thus, the proposed system will provide an increase in recovery of liquid hydrocarbons, a decrease in energy consumption for the injection process, an increase in power and energy generation, wherein the power and energy generation is provided without emissions into the environment, since the carbon dioxide is injected into the hydrocarbon-bearing formation. The proposed system will also provide other objects of the present invention.

### BRIEF DESCRIPTION OF THE DRAWINGS

Figures (Fig. 1 and Fig. 2) are adduced for explaining the present invention and illustrating advantages thereof. Embodiments of the proposed system shown in the figures (Fig. 1 and Fig. 2) do not cover all embodiments of the present invention, and the figures are not necessarily to scale. The same reference numbers are used for designating the same or similar elements in the figures (Fig. 1 and Fig. 2).
Fig. 1 schematically illustrates a hydrocarbon formation, a production well, an injection well, a separator, and an embodiment of the proposed system comprising: an internal combustion engine, a carbon dioxide separation plant, a liquefaction device, and an injection device.
Fig. 2 schematically illustrates a hydrocarbon formation, a production well, a separator, a device for injecting water, two injection wells, and an embodiment of the proposed system comprising: a gas-preparing unit; a power plant comprising an internal combustion engine; a carbon dioxide separation plant; a liquefaction device, and an injection device.

### DETAILED DESCRIPTION

The present invention may be carried out in many embodiments. Certain embodiments of the invention are described in more details. However, the present description should be considered as an illustration of the principles of the invention, and the embodiments described below do not cover all embodiments of the invention.
Fig. 1 schematically illustrates a hydrocarbon-bearing formation 8 penetrated by a production well 9 and by an injection well 5; a separator 7 being in fluid communication with the production well 9; and an embodiment of the proposed system, wherein the embodiment of the proposed system comprises: an injection device 2 being in fluid communication with the injection well 5, a power plant 1 comprising an internal combustion engine 3 having an input 4 for air, a driven device 11, a carbon dioxide separation plant 6, a liquefaction device 10.

The carbon dioxide separation plant 6 and the liquefaction device 10 may be carried out, for example, as detached units of equipment, or as a single unit of equipment, or as a single device, or as a combined plant (comprising the carbon dioxide separation plant 6 and the liquefaction device 10), or the like.

The embodiment of the proposed system and the equipment that are shown in Fig. 1 operate as follows. A hydrocarbon-containing fluid is recovered from the hydrocarbon-bearing formation 8 through the production well 9 where a tubing string is positioned. A stream 12 of the hydrocarbon-containing fluid, after recovering from the hydrocarbon-bearing formation 8 through the production well 9, enters into the separator 7 configured for separating a gas from the hydrocarbon-containing fluid, wherein the separator 7 has structural elements (for example, an input in the form of an inlet hole or, for example, in the form of an inlet pipe) for receiving the hydrocarbon-containing fluid. The separator 7 also has structural elements (for example, an outlet hole or, for example, an outlet pipe) for discharging the gas separated from the hydrocarbon containing fluid.

A gas is separated from the hydrocarbon-containing fluid in the separator 7.

The separated gas comprises at least one gaseous hydrocarbon, for example, methane. The separated gas may also comprise at least one heavy hydrocarbon, for example, such as ethane, propane, butane, hexane, and the like. Moreover, the separated gas may comprise at least one of the following substances: a sulfur-containing substance, nitrogen, carbon dioxide, solid particles, water (for example, water drops, or water vapor, or both), and other substances. At the beginning of the gas injection, carbon dioxide may be absent in the separated gas, or may be present in the separated gas in a low concentration. And further, as mentioned above, the concentration of carbon dioxide in the separated gas increases and may reach 90 % and more.

A stream 14 of the separated gas is passed from the separator 7 to the internal combustion engine 3. The internal combustion engine 3 has structural elements (for example, an input in the form of an inlet hole or, for example, in the form of an inlet pipe) for receiving the separated gas.

The internal combustion engine 3 is configured to operate by combusting the separated gas with air. Accordingly, the separated gas is used as a gaseous fuel, and the air is used as an oxidant. The internal combustion engine 3 is configured to receive the air through the input 4. The internal combustion engine 3 has necessary structural elements for operating by the combustion. The internal combustion engine 3 is configured to produce a compressed gas-air mixture (which comprises the air and the separated gas) prior to the combustion. Within the present description and claims, the term "compressed gas-air mixture" refers to a gas-air mixture being under a pressure, i.e., a gas-air mixture having a pressure higher than the atmospheric pressure.

The separated gas is combusted with air in the internal combustion engine 3 that generates mechanical energy during operation. A significant concentration of carbon dioxide in the separated gas takes place that provides a high Methane number of the separated gas. As a result, after ignition of the compressed gas-air mixture, the combustion of the separated gas proceeds stably, without detonation, and a steady operation of the internal combustion engine 3 at the maximum power (that is the rated power) is achieved. Accordingly, an increase in power (and an energy amount) generated by the internal combustion engine 3 is provided.

The mechanical energy generated by the internal combustion engine 3 is used to drive the driven device 11. For example, a coupling (or a belt drive, or a gear train or the like) may be used (not shown in Fig. 1) in order for connecting a shaft of the driven device 11 with a shaft of the internal combustion engine 3. The driven device 11 may be an electric generator, or a pump, or a compressor, or a pump-and-compressor plant, or the like. If the driven device 11 is the electric generator, then electrical energy generated by the electric generator may be used to supply, for example, the carbon dioxide separation plant 6, or the liquefaction device 10, or the injection device 2, or electric motors, or other oilfield equipment, or any combination thereof. Also, the electrical energy generated by the electric generator may be used to supply, for example, other consumers, wherein the generated electrical energy may be transformed and transmitted via an electrical grid, so as to supply remote consumers. In the case, if the driven device 11 is the compressor, then the compressor may be used, for example, for compressing a gas or gases. In the case, if the driven device 11 is the pump, then the pump may be used, for example, for injecting liquefied carbon dioxide (for example, into the hydrocarbon-bearing formation 8), or, for example, for injecting water into the hydrocarbon-bearing formation 8, or, for example, for injecting a liquid, or the like.

The internal combustion engine 3 may be, for example, a gas engine, or, for example, a gas turbine engine, or the like.

If the internal combustion engine 3 is the gas engine, then during the operation of the gas engine, the separated gas and the air which is to be used as an oxidant are mixed to form the gas-air mixture (for example, in a mixer), and then the gas-air mixture is compressed, for example, by a piston in a cylinder (or by pistons in cylinders) of the gas engine so as to produce the compressed gas-air mixture prior to the combustion (i.e., to produce the compressed gas-air mixture during ignition or prior to ignition). As well, the gas-air mixture may be compressed in the gas engine prior to feeding the gas-air mixture into the cylinders. Or, for example, the air may be compressed by a turbocharger to feed the gas-air mixture into the cylinders under pressure. If the compression by the turbocharger is used, the gas-air mixture may be cooled prior to feeding into the cylinders of the gas engine. A pressure of the compressed gas-air mixture may be set depending on a composition of the separated gas and the Methane number of the separated gas. The compressed gas-air mixture is ignited in a combustion chamber of the gas engine, for example, by using a spark ignition, or, for example, by using a precombustion-chamber ignition (or, for example, a laser ignition). The ignition advance is used for setting the correct timing of ignition of the compressed gas-air mixture.

If the internal combustion engine 3 is the gas turbine engine, then during the operation of the gas turbine engine, the stream 14 of the separated gas may be passed to the gas turbine engine under pressure. If the pressure of the separated gas should be raised, then the separated gas is compressed in a supercharger (or in a compressor). The separated gas and the air which is supplied under pressure by the compressor of the gas turbine engine are mixed to produce the compressed gas-air mixture prior to the combustion (i.e., to produce the compressed gas-air mixture during ignition or prior to ignition) in a combustion chamber (which is also denoted the term "combustor") of the gas turbine engine.

An air-fuel ratio may be maintained in the internal combustion engine 3 (using, for example, a mixer). In other words, a ratio of the air to combustible substances may be determined so, that the compressed gas-air mixture may comprise the air in the amount, which is theoretically necessary for oxidizing the combustible substances, or the compressed gas-air mixture may comprise more air, than it is theoretically necessary for oxidizing the combustible substances in the compressed gas-air mixture (for example, to ensure the complete combustion of the combustible substances). In the case of achieving a decrease of an oxygen concentration in products of combustion, the ratio of the air to the combustible substances may be determined so, that the compressed gas-air mixture may comprise less of air, than it is theoretically necessary for oxidizing the combustible substances.

The internal combustion engine 3 is configured to discharge an exhaust gas resulting from the combustion. In order to discharge the exhaust gas, the internal combustion engine 3 has an output (for example, an outlet hole) for the exhaust gas, and may be equipped with an exhaust pipe, or, for example, with an assembly of devices for discharging the exhaust gas, or the like. The exhaust gas is a gaseous mixture which is resulted of the combustion during the operation of the power plant 1. The composition and temperature of the exhaust gas depend on design features of the power plant 1 and the internal combustion engine 3, a value of the air-fuel ratio, an air composition, a composition of the separated gas, and the like. The exhaust gas comprises nitrogen, carbon dioxide, water. Moreover, the exhaust gas may comprise oxygen, nitrogen oxides, soot, solid particles, unburned hydrocarbons, sulfur-containing substances, carbon monoxide, and the like. The exhaust gas comprises, for example, about 2 to 12 % of carbon dioxide, if the separated gas comprises only hydrocarbons. The nitrogen concentration in the exhaust gas is higher than the concentration of other substances in the exhaust gas. If the separated gas comprises only hydrocarbons, then the exhaust gas comprises, for example, about 71 to 75 vol. % of nitrogen, and after removing water (for example, drops of water or water vapor) from the exhaust gas, the nitrogen concentration in the exhaust gas may reach, for example, about 82 to 88 vol. %. The temperature of the exhaust gas may be, for example, from about 350 to 550 °C and higher. The concentration of carbon dioxide or nitrogen (or both) in the exhaust gas as well as the temperature of the exhaust gas may also be lower or higher than said values.

In order for generating thermal energy (that is heat), the power plant 1 may comprise a heat exchanger (not shown in Fig. 1) connected to a cooling apparatus and configured to heat a heat-transfer fluid (for example, water). Or, in order for generating thermal energy (that is heat), the power plant 1 may comprise a waste-heat boiler (not shown in Fig. 1) configured for heating a heat-transfer fluid (for example, water) by transferring at least a part of heat (that is thermal energy) from the exhaust gas to the heat-transfer fluid (for example, water).

The exhaust gas is discharged (released) from the internal combustion engine 3, and a stream 15 of the exhaust gas is directed to the carbon dioxide separation plant 6 which is configured to recover a carbon-dioxide-containing constituent of the exhaust gas from the exhaust gas. In the carbon dioxide separation plant 6, various techniques may be used to recover the carbon-dioxide-containing constituent from the exhaust gas. For example, in order to recover the carbon-dioxide-containing constituent from the exhaust gas, it is possible to use cryogenic equipment, to apply a fractional condensation, a low-temperature separation process, an absorption process, an adsorption process, membrane equipment, and the like. The presented examples of the techniques are provided as an illustration and not cover all possible embodiments of the carbon dioxide separation plant 6.

By using any selected technique, the carbon-dioxide-containing constituent of the exhaust gas is recovered from the exhaust gas in the carbon dioxide separation plant 6. After recovering the carbon-dioxide-containing constituent, a remainder of the exhaust gas is a nitrogen-containing constituent. That is, the exhaust gas is separated into two constituents: the carbon-dioxide-containing constituent and the nitrogen-containing constituent. Carbon dioxide usually is the main part of the carbon-dioxide-containing constituent. The carbon-dioxide-containing constituent may comprise, for example, up to 70-99 % of carbon dioxide and more, for example, 99.9 % and more. The concentration of carbon dioxide in the carbon-dioxide-containing constituent depends on techniques and equipment used in the carbon dioxide separation plant 6. In addition to carbon dioxide, nitrogen, oxygen, water (for example, in the form of water drop, or water vapor, or both) and other substances may be present in the carbon-dioxide-containing constituent. Also, the pressure and temperature of the carbon-dioxide-containing constituent depend on the techniques and equipment used in the carbon dioxide separation plant 6. In any case, the pressure and temperature of the carbon-dioxide-containing constituent are not limited by any specific values. For example, the pressure of the carbon-dioxide-containing constituent recovered in the carbon dioxide separation plant 6 may be from 0.1 MPa to 15 MPa, and the temperature may be from -20 °C to +350 °C. The pressure or temperature (or both) of the carbon-dioxide-containing constituent recovered in the carbon dioxide separation plant 6 may also be lower or higher than said values.

Nitrogen usually is the main part of the nitrogen-containing constituent. In addition to nitrogen, oxygen, water (for example, in the form of water drops, or water vapor, or both) and other substances may be present in the nitrogen-containing constituent. The nitrogen-containing constituent is discharged from the carbon dioxide separation plant 6 into the atmosphere, or is used, for example, as described below.

A stream 16 of the carbon-dioxide-containing constituent is passed from the carbon dioxide separation plant 6 to the liquefaction device 10, where at least a part of the carbon-dioxide-containing constituent is liquefied to produce liquefied carbon dioxide. For example, if carbon dioxide is a part of the carbon-dioxide-containing constituent, and nitrogen, or the similar gas (or the similar gases), or both are present in the carbon-dioxide-containing constituent, then so as to produce the liquefied carbon dioxide, a part of the carbon-dioxide-containing constituent is liquefied, and nitrogen and the similar non-condensable gas (or the similar non-condensable gases) are discharged from the liquefaction device 10. However, a small amount of nitrogen and the like gas may be dissolved in the liquefied carbon dioxide.

For example, if the carbon-dioxide-containing constituent consists of carbon dioxide, then, the entire volume of the carbon-dioxide-containing constituent is liquefied to produce the liquefied carbon dioxide in the liquefaction device 10. For example, if water (for example, in the form of water vapor) is present in the carbon-dioxide-containing constituent, then several stages are used to produce the liquefied carbon dioxide in the liquefaction device 10. At the first stage, in order to remove water prior to producing the liquefied carbon dioxide, the carbon-dioxide-containing constituent, for example, is compressed (e.g., in a compressor) and then cooled (e.g., in an intermediate heat exchanger) so as to condense (liquefy) water vapor. At the second stage, the carbon-dioxide-containing constituent is additionally compressed (e.g., in an additional compressor) and then cooled (e.g., in an additional heat exchanger) to produce the liquefied carbon dioxide. Or the second stage is carried out as follows: the carbon-dioxide-containing constituent is additionally compressed (e.g., in an additional compressor) and further cooled (e.g., in an additional heat exchanger), and then the pressure of the carbon-dioxide-containing constituent is increased by a pump (e.g., in a feeding pump) to produce the liquefied carbon dioxide. Combinations of the presented examples of embodiments of the liquefaction or other embodiments of the liquefaction of at least a part of the carbon-dioxide-containing constituent are possible. The liquefied carbon-dioxide-containing constituent may comprise, for example, at least 95 % of carbon dioxide, or, for example, at least 99 % of carbon dioxide, or, for example, at least 99.9 % of carbon dioxide. It is possible to produce the liquefied carbon dioxide that comprises, for example, 99.99 % of carbon dioxide and more.

The liquefaction device 10 is configured to liquefy at least a part of the carbon-dioxide-containing constituent to produce the liquefied carbon dioxide. Accordingly, the liquefaction device 10 comprises various apparatus and devices to provide the liquefaction of the carbon-dioxide-containing constituent. In order to carry out the liquefaction in the liquefaction device 10, a certain pressure of the carbon-dioxide-containing constituent and a certain temperature of the carbon-dioxide-containing constituent are provided. The critical temperature of carbon dioxide is about 31 °C, and the critical pressure of carbon dioxide is about 7.38 MPa. Accordingly, the temperature of the liquefied carbon dioxide may be, for example, about 26 to 27 °C, if the pressure of the liquefied carbon dioxide is, for example, about 7.5 MPa. The density of the liquefied carbon dioxide at the said temperature and said pressure is approximately equal to the density of the liquefied carbon dioxide at the temperature of about 35 to 37 °C and the pressure of about 12 MPa. The pressure or temperature (or both) of the liquefied carbon dioxide produced in the liquefaction device 10 may also be lower or higher than said values. In order to provide the certain temperature, the liquefaction device 10 may comprise, for example, a heat exchanger (or a refrigerator, or any cooling device) with water cooling or, for example, with air cooling, where the carbon-dioxide-containing constituent is cooled. The liquefaction device 10 may also comprise, for example, a refrigerating machine, and by using thereof, the carbon-dioxide-containing constituent is cooled to produce the liquefied carbon dioxide whose temperature is, e.g., -10 °C, or, e.g., -15 °C, or lower. The heat exchanger (or a device, or an apparatus) intended for cooling the carbon-dioxide-containing constituent during the liquefaction may be such as a condenser in which the liquefied carbon dioxide is produced by cooling the carbon-dioxide-containing constituent. In order to provide the certain pressure of the carbon-dioxide-containing constituent, the liquefaction device 10 may comprise, for example, a compressor (or, for example, a compressor and a pump) in which the carbon-dioxide-containing constituent is compressed. An embodiment of the liquefaction device 10 is possible, wherein the temperature of the carbon-dioxide-containing constituent is such that the liquefied carbon dioxide may be produced by compression of the carbon-dioxide-containing constituent (for example, by a compressor, or, for example, by a compressor and then by a pump). Also, an embodiment of the liquefaction device 10 is possible, where the liquefaction includes several stages, as noted above. For example, at the first stage of the liquefaction, the carbon-dioxide-containing constituent is compressed (e.g., by a compressor) and then cooled (e.g., in an intermediate cooling device) for condensing, for example, water vapor and removing water, and at the second stage of the liquefaction, the carbon-dioxide-containing constituent is cooled (e.g., in a condenser) for producing the liquefied carbon dioxide. The liquefaction device 10 may comprise, for example, a valve for discharging nitrogen or the similar non-condensable gas (or gases) during the liquefaction, or after the liquefaction, or both. The liquefaction device 10 may comprise a storage tank for storing the liquefied carbon dioxide. Moreover, an embodiment of the liquefaction device 10 and the carbon dioxide separation plant 6 is possible, where the carbon dioxide separation plant 6 and the liquefaction device 10 are configured to carry out the liquefaction of at least a part of the carbon-dioxide-containing constituent during recovery of the carbon-dioxide-containing constituent from exhaust gas. In this case, a fractional condensation, for example, may be applied, where the liquefaction is carried out during stepwise cooling of the carbon-dioxide-containing constituent during its recovery from the exhaust gas.

The liquefaction device 10 may comprise a feeding pump configured for pumping the liquefied carbon dioxide. For example, the feeding pump may be included in a structure of the liquefaction device 10, if it is necessary to increase the pressure of the liquefied carbon dioxide. For example, a piston pump (or a plunger pump), a screw pump, a rotary pump, or the like may be used as the feeding pump. In the case when an increase in the pressure of the liquefied carbon dioxide is not required, then the feeding pump may not be included in the structure of the liquefaction device 10.

A stream 17 of the liquefied carbon dioxide is passed from the liquefaction device 10 to the injection device 2 configured to inject the liquefied carbon dioxide into the hydrocarbon-bearing formation 8 through the injection well 5. By using the injection device 2, the liquefied carbon dioxide is injected into the hydrocarbon-bearing formation 8 through the injection well 5. The injection of the liquefied carbon dioxide into the hydrocarbon-bearing formation 8 provides an increase in the hydrocarbon-containing fluid recovery and an increase in the quality of the separated gas from the hydrocarbon-containing fluid due to an increase in the Methane number. At the same time, the energy generation without environmental emissions is provided by the internal combustion engine 3, since the carbon dioxide is injected into the hydrocarbon-bearing formation 8. Other substances (for example, water) together with the liquefied carbon dioxide may pass in small quantities (or volumes) from the liquefaction device 10 into the injection device 2. However, after the injection of the liquefied carbon dioxide into the formation 8, the other substances and impurities (for example, such as nitrogen) in the liquefied carbon dioxide do not adversely affect the interaction of the carbon dioxide with formation fluids and do not reduce the Methane number of the separated gas due to small quantities (or volumes) of the other substances and the low concentration of the impurities.

The injection of the liquefied carbon dioxide may be carried out into a depleted zone of the formation 8, or into an aqueous zone of the formation 8, or into a selected for injection hydrocarbon-bearing zone of the formation 8, or the like. For example, if the formation 8 is an oil-bearing formation, then the injection of the liquefied carbon dioxide may be carried out, for example, into a gas cap, or into an oil-bearing zone of the oil-bearing formation, or into an aqueous zone of the oil-bearing formation, or the like.

Various devices and elements may be used in the injection device 2.

If the pressure of the liquefied carbon dioxide at the output of the liquefaction device 10 exceeds the formation pressure and allows to carry out the injection of the liquefied carbon dioxide into the hydrocarbon-bearing formation 8, then, in this case, the injection device 2 may be made, for example, in the form of a conduit connecting the liquefaction device 10 and the injection well 5. The conduit may include, for example, at least one of the following: a pipe, a tubing string, fitting, or any combination thereof, or the like. For example, the injection device 2 may include a pipe that is connected to a tubing string positioned in the injection well 5.

If the pressure of the liquefied carbon dioxide is insufficient for the injection, then, in this case, the injection device 2 may include a device (or a plant, or the like) for pumping the liquefied carbon dioxide. For example, the injection device 2 may comprise an injection pump for pumping the liquefied carbon dioxide. For example, a piston pump (or a plunger pump), a screw pump, a rotary pump, or the like may be used as the injection pump, wherein each of these pumps may be driven, for example, by an electric motor, or, for example, by the internal combustion engine 3. The injection device 2 may comprise other structural elements in order for carrying out the injection of the liquefied carbon dioxide into the hydrocarbon-bearing formation 8 through the injection well 5. Moreover, the injection device 2 may comprise a storage tank for storing the liquefied carbon dioxide.

By using the injection device 2, the liquefied carbon dioxide may be injected into the formation 8 through the production well 9 (such injection is not shown in Fig. 1), for example, to carry out the huff and puff process. That is, the cyclic injection of the liquefied carbon dioxide is carried out, wherein the liquefied carbon dioxide is injected into the formation 8 through the production well 9 for a period of time; then the production well 9 is shut in for a period of time in order for the formation zone to be soaked by the injected carbon dioxide; and then a hydrocarbon-containing fluid is recovered from the formation 8 through the production well 9. It is also possible to apply similar or other embodiments of the huff and puff process.

It is also possible that injection and recovery are carried out cyclically using more than one well. For example, during the first part of the cycle, the injection of the liquefied carbon dioxide into the formation 8 is carried out through the injection well 5, and the recovery of the hydrocarbon-containing fluid is carried out through the production well 9. And during the next part of the cycle, for example, the injection of the liquefied carbon dioxide into the hydrocarbon-bearing formation 8 is carried out through the production well 9 (such injection is not shown in Fig. 1), and the recovery of the hydrocarbon-containing fluid is carried out through the injection well 5 (such recovery is not shown in Fig. 1).

Fig. 2 schematically illustrates the hydrocarbon-bearing formation 8 penetrated by a production well 9 which is in fluid communication with a separator 7; an injection well 5 penetrating the formation 8; an injection well 46 penetrating the formation 8; and an embodiment of the proposed system, wherein the embodiment of the proposed system comprises: a gas-preparing unit 20 comprising a gas purification device 13, a gas treatment device 18, a gas heating device 19; a power plant 21 comprising an internal combustion engine 24; a carbon dioxide separation plant 28; a purification unit 31; a liquefaction device 37; an injection device 2 which is in fluid communication with the injection well 5; a compressor device 43; a device 47 for injecting water.

The production well 9 shown in Fig. 2 is similar to the production well 9 shown in Fig. 1. The injection well 5 shown in Fig. 2 is similar to the injection well 5 shown in Fig. 1. The separator 7 shown in Fig. 2 is similar to the separator 7 shown in Fig. 1. The injection device 2 shown in Fig. 2 is similar to the injection device 2 shown in Fig. 1.

The embodiment of the proposed system and the equipment that are shown in Fig. 2 operate as follows. A hydrocarbon-containing fluid is recovered from the formation 8 through the production well 9. After recovering from the formation 8, a stream 12 of the hydrocarbon-containing fluid is passed to the separator 7 configured for receiving the hydrocarbon-containing fluid from the production well 9. The hydrocarbon-containing fluid in the stream 12 shown in Fig. 2 is similar to the hydrocarbon-containing fluid in the stream 12 shown in Fig. 1.

A gas is separated from the hydrocarbon-containing fluid in the separator 7.

From the separator 7, a stream 14 of the separated gas is passed to the gas-preparing unit 20 that has structural elements (for example, an input in the form of an inlet hole or, for example, in the form of an inlet pipe) for receiving the separated gas. The characteristics (such as composition and the like) of the separated gas in the stream 14 shown in Fig. 2 are identical to the characteristics (such as composition and the like) of the separated gas in the stream 14 shown in Fig. 1.

In the gas-preparing unit 20, the separated gas is prepared for combusting in the power plant 21. A selected substance (the term "selected substance" refers to at least one sulfur-containing substance, or solid particles, or water, or at least a part of heavy hydrocarbons, or a part of the amount of carbon dioxide, or any combination thereof) is removed from the separated gas in the gas-preparing unit 20 to carry out this preparation. The separated gas is also heated in the gas-preparing unit 20.

The gas-preparing unit 20 comprises the gas purification device 13 configured for removing (reducing the concentration) water (for example, water drops, or water vapor, or both) from the separated gas, or removing (reducing the concentration) solid particles from the separated gas, or removing (reducing the concentration) at least one sulfur-containing substance from the separated gas, or removing (reducing the concentration) liquid hydrocarbons from the separated gas, or removing (reducing the concentration) the like from the separated gas, or removing (reducing the concentration) any combination thereof from the separated gas. For example, the gas purification device 13 may include a device such as a gas separator for removing water, solid particles, liquid hydrocarbons and the like. The gas purification device 13 may comprise a plant (or an apparatus, or a device) used to remove water from the separated gas by dehydration using glycol, or by cooling the separated gas, or both. The gas purification device 13 may include, for example, a membrane unit for removing at least one sulfur-containing substance (or nitrogen, or both) from the separated gas. Or, for example, a scrubber using sodium carbonate as a reagent, or an amine gas treating process, or the like may be applied to remove at least one sulfur-containing substance from the separated gas.

The gas-preparing unit 20 comprises the gas treatment device 18 configured for removing at least a part of heavy hydrocarbons (or a part of carbon dioxide, or both) from the separated gas. The part of carbon dioxide may be removed from the separated gas if there is an excess of carbon dioxide in the separated gas. The gas treatment device 18 may include, for example, a low-temperature separation unit for a fractional separation of the separated gas so as to remove a part of carbon dioxide from the separated gas, or to remove at least a part of heavy hydrocarbons from the separated gas, or both. It is possible to use, for example, a low-temperature separation unit, where the separated gas cools upon its expansion and pressure drop. This leads to the condensation of at least a part of heavy hydrocarbons, or a part of carbon dioxide, or both. The condensed heavy hydrocarbons produced in the gas treatment device 18, may be directed, for example, to the further treatment, or to the injection device 2 for injecting into the formation 8, or both. And the condensed carbon dioxide produced in the gas treatment device 18 may be supplied, for example, to the liquefaction device 37, or to the injection device 2 for injecting into the formation 8, or both.

The gas-preparing unit 20 includes the gas heating device 19 (for example, a heat exchanger) for heating the separated gas. The heating of the separated gas may also be carried out in the power plant 21 (such heating is not shown in Fig. 2). The gas-preparing unit 20 has structural elements (for example, an outlet hole or, for example, an outlet pipe) for discharging the separated gas after the preparation thereof in the gas-preparing unit 20.

A stream 22 of the separated gas is supplied (the separated gas supply may be carried out under pressure) from the gas-preparing unit 20 to the power plant 21 comprising the internal combustion engine 24. The internal combustion engine 24 has structural elements (for example, an input in the form of an inlet hole or, for example, in the form of an inlet pipe) for receiving the separated gas from the gas-preparing unit 20. The separated gas is combusted with air in the internal combustion engine 24 that generates mechanical energy during operation. An exhaust gas resulting from the combustion of the separated gas with the air is discharged (released) from the internal combustion engine 24. The exhaust gas comprises nitrogen, carbon dioxide, water (for example, water drops, or water vapor, or both). Moreover, the exhaust gas may comprise oxygen, nitrogen oxides, soot, solid particles, unburned hydrocarbons, sulfur-containing substances, carbon monoxide, and the like.

The power plant 21 is one of possible modifications of the power plant 1. The internal combustion engine 24 is one of possible modifications of the internal combustion engine 3. The structure and operation of the power plant 21 and internal combustion engine 24 are similar to the structure and operation of the power plant 1 and internal combustion engine 3, described above. The difference between the internal combustion engine 24 and the internal combustion engine 3 is that the internal combustion engine 24 is configured for operating on the separated gas when the separated gas is supplied from the gas-preparing unit 20, and the internal combustion engine 3 is configured for operating on the separated gas when the separated gas is supplied from the separator 7. This difference may be in applied materials, compression ratio and other design features that are described in the technical literature and known to those skilled in the art. Furthermore, differences between the power plant 21 and power plant 1 as well as differences between the internal combustion engine 24 and internal combustion engine 3 are that the power plant 21 and internal combustion engine 24 may be equipped with devices for decreasing the oxygen concentration in the exhaust gas and with devices for adding a part of liquefied carbon dioxide (or a part of the carbon-dioxide-containing constituent) to the separated gas. Some of these and other differences will be represented below.

A stream 23 of the exhaust gas is passed from the power plant 21 to a reboiler 26. The reboiler 26 may be made, for example, in the form of a heat exchanger. Heat (thermal energy) from the exhaust gas is transferred by the reboiler 26 for usage in a desorber 27. Accordingly, the temperature of the exhaust gas is reduced in the reboiler 26.

A stream 30 of the exhaust gas from the reboiler 26 is passes to the purification unit 31. A certain substance (the term "certain substance" refers to soot, or solid particles, or water, or nitrogen oxides, or unburned hydrocarbons, or oxygen, or carbon monoxide, or any combination thereof) is removed from the exhaust gas in the purification unit 31. The exhaust gas is cooled in the purification unit 31. For example, the purification unit 31 may comprise the following devices (apparatus, plants): a filter (for example, using a catalyst) for removing soot from the exhaust gas; a scrubber (or a filter, for example, having an electrostatic precipitator) for removing solid particles from the exhaust gas; a gas separator (or, for example, a scrubber) for removing water (for example, water drops, or water vapor, or both) and solid particles from the exhaust gas; a catalytic converter for removing nitrogen oxides from the exhaust gas; as well as devices (for example, using the catalytic converter) for removing unburned hydrocarbons (or carbon monoxide, or oxygen, or any combination thereof) from the exhaust gas. The filter for removing soot from the exhaust gas may also be mounted in the power plant 21 (for example, in an exhaust system of the internal combustion engine 24). The purification unit 31 may comprise a scrubber for purifying and cooling the exhaust gas, where water is used to wash the exhaust gas.

A stream 32 of the exhaust gas is passed (for example, by a fan) from the purification unit 31 to the carbon dioxide separation plant 28. The carbon dioxide separation plant 28 is one of possible modifications of the carbon dioxide separation plant 6. The carbon dioxide separation plant 28 is configured to recover of a carbon-dioxide-containing constituent of the exhaust gas from the exhaust gas and configured to produce a nitrogen-containing constituent of the exhaust gas. The carbon dioxide separation plant 28 comprises devices for absorption and desorption of the carbon-dioxide-containing constituent. The carbon dioxide separation plant 28 includes an absorption unit comprising an absorber (that is also called as an absorption column) 29 and a desorption unit comprising the desorber (that is also called as a desorption column or a stripper) 27 and the reboiler 26. A carbon-dioxide-containing constituent is recovered from the exhaust gas in the carbon dioxide separation plant 28 in the following manner. The carbon-dioxide-containing constituent is absorbed from the exhaust gas by an absorbent solution (that is by a chemical absorbent) in the absorber 29 so as to obtain a carbon-dioxide-enriched solution. The carbon-dioxide-containing constituent comprises carbon dioxide. The carbon-dioxide-containing constituent may also comprise other substances (for example, nitrogen, or oxygen, water, or others, or any combination thereof) that may be absorbed together with carbon dioxide by the absorbent solution. The concentration of said substances depends on properties of the absorbent solution, the structure of the carbon dioxide separation plant 28 and the like. Solutions of amines (for example, a solution of ethanolamine in water), a solution of ammonia in water, and the like may be used for absorption of the carbon-dioxide-containing constituent. After said absorption, a remainder of the exhaust gas is a nitrogen-containing constituent. The nitrogen-containing constituent comprises nitrogen. The nitrogen-containing constituent may also comprise oxygen, water (for example, in the form of water vapor), carbon dioxide in a low concentration, and other substances. A stream 33 of the nitrogen-containing constituent is discharged from the absorber 29, and the carbon-dioxide-enriched solution is directed to the desorber 27.

The carbon-dioxide-containing constituent is desorbed from the carbon-dioxide-enriched solution in the desorber 27 at the temperature and pressure required for desorption. For example, the carbon-dioxide-enriched solution may be heated using thermal energy (heat) of the exhaust gas to desorb the carbon-dioxide-containing constituent. In this case, the reboiler 26 is used to transfer at least a part of heat from the exhaust gas to the carbon-dioxide-enriched solution to desorb the carbon-dioxide-containing constituent in the desorber 27. After said desorption, the carbon-dioxide-containing constituent is discharged form the desorber 27. The carbon dioxide separation plant 28 may comprise a heating device (not shown in Fig. 2) where a heat-transfer fluid (for example, water) is heated using thermal energy (heat) of the carbon-dioxide-containing constituent. The heating device is configured to transfer at least a part of heat from the carbon-dioxide-containing constituent to the heat-transfer fluid after the recovery of the carbon-dioxide-containing constituent from the exhaust gas. The temperature of the carbon-dioxide-containing constituent decreases in the heating device. As a result, water and the constituents of the chemical absorbent that may be present as a vapor in the carbon-dioxide-containing constituent condense in the heating device. Detailed descriptions of the structures and operations of the carbon dioxide separation plants are described in the technical literature and are known to those skilled in the art.

A stream 34 of the carbon-dioxide-containing constituent is passed from the carbon dioxide separation plant 28 to the liquefaction device 37. The liquefaction device 37 is a modification of the liquefaction device 10. The liquefaction device 37 may comprise structure elements (for example, a device) for compressing carbon-dioxide-containing constituent; structure elements (for example, a device) for removing water from the carbon-dioxide-containing constituent; structure elements (for example, a device) for cooling the carbon-dioxide-containing constituent; structure elements (for example, a device) for pumping (or supplying) liquefied carbon dioxide.

The liquefaction device 37 shown in Fig. 2 comprises a compressor 35, a drying device 36, a condenser 38 and a feeding pump 39. The carbon-dioxide-containing constituent is compressed by the compressor 35 in the liquefaction device 37. The liquefaction device 37 may comprise a scrubber for purifying and cooling by water washing the carbon-dioxide-containing constituent prior to the compression in the compressor 35. After the compression, the carbon-dioxide-containing constituent is passed to the drying device 36 where water is removed from the carbon-dioxide-containing constituent using, for example, glycol, or, for example, adsorption, or, for example, an intermediate refrigerator, or the like. The carbon-dioxide-containing constituent is passed from the drying device 36 to the condenser 38 cooled by, for example, a refrigerating machine, or, for example, a water cooling device, or, for example, an air cooling device. The carbon-dioxide-containing constituent is cooled in the condenser 38. At least a part of the carbon-dioxide-containing constituent is liquefied during the cooling so as to produce liquefied carbon dioxide in the condenser 38. At that, a small amount of water or a small amount of non-condensable gas (or gases), for example, such as nitrogen, or oxygen, or the like, or any combination thereof may be dissolved in the liquefied carbon dioxide. Non-dissolved part of the non-condensable gas (or gases) is discharged from the condenser 38, for example, using a valve (not shown in Fig. 2). High concentration of carbon dioxide is achieved in the liquefied carbon dioxide produced in the liquefaction device 37. For example, the concentration of carbon dioxide in the liquefied carbon dioxide may be about 95 %, or about 99.5 %, or about 99.9 % and more. The liquefied carbon dioxide is passed to the feeding pump 39 configured for pumping the liquefied carbon dioxide.

The liquefaction device 37 may comprise a thermo-regulating device (not shown in Fig. 2), which is configured for establishing a desired temperature of the liquefied carbon dioxide after the liquefaction or during the liquefaction of at least a part of the carbon-dioxide-containing constituent. The desired temperature of the liquefied carbon dioxide is established, for example, in order to avoid the adverse effect on equipment of low temperatures (for example, at -20 °C and lower), or, for example, in order to avoid ice plugs in pipelines, or, for example, in order to maintain the desired mode of the injection of the liquefied carbon dioxide into the hydrocarbon-bearing formation 8. The thermo-regulating device may be placed in the liquefaction device 37 or carried out in the form of a single device (not shown in Fig. 2).

A stream 40 of the liquefied carbon dioxide is passed under pressure from the liquefaction device 37 to the injection device 2 by the feeding pump 39. Using the injection device 2, the liquefied carbon dioxide is injected into the hydrocarbon-bearing formation 8 through the injection well 5 (a valve 41 is closed).

Prior to the injection into the formation 8, an additional fluid may be added (not shown in Fig. 2) to the liquefied carbon dioxide, or to the carbon-dioxide-containing constituent, or to both, wherein the additional fluid is at least a part of the heavy hydrocarbons produced in the gas treatment device 18, or the carbon dioxide produced in the gas treatment device 18, or both. A device (for example, such as a mixer) configured for adding the additional fluid (which is heavy hydrocarbons, or carbon dioxide, or both) to the liquefied carbon dioxide (or to the carbon-dioxide-containing constituent, or to both) may be placed, for example, in the liquefaction device 37, or, for example, in the injection device 2, or may be made in the form of a single unit. The device configured for adding the additional fluid may be connected to a pipe for receiving the carbon-dioxide-containing constituent (or the liquefied carbon dioxide, or both) and a pipe (or pipes) for receiving, for example, the carbon dioxide produced in the gas treatment device 18, or at least a part of the heavy hydrocarbons produced in the gas treatment device 18, or both.

At least a part of the nitrogen-containing constituent may be injected into the hydrocarbon-bearing formation 8 in the following manner. After the injection the liquefied carbon dioxide into the formation 8 through the injection well 5 in an amount sufficient for forming a carbon dioxide slug in the formation 8, a stream 42 of the nitrogen-containing constituent is directed from the carbon dioxide separation plant 28 (a valve 44 is closed) to the compressor device 43. The compressor device 43 is configured for injecting the nitrogen-containing constituent into the hydrocarbon-bearing formation 8 through the injection well 5. Various devices may be used for injecting the nitrogen-containing constituent. For example, the compressor device 43 may comprise at least one of the following devices: a compressor (or a pump-and-compressor plant), a pipe, a tubing string, a fitting, and the similar equipment. The compressor device 43 is used to inject the nitrogen-containing constituent into the hydrocarbon-bearing formation 8 through the injection well 5 in order to advance the carbon dioxide slug, for example, to the production well 9. In this case, technical measures are provided (for example, the pressure of the nitrogen-containing constituent is limited) so that to avoid nitrogen breakthrough into production wells penetrating into the hydrocarbon-bearing formation 8.

As was mentioned above, oxygen may be present in the nitrogen-containing constituent. A part of the nitrogen-containing constituent, or a part of the carbon-dioxide-containing constituent, or a part of the liquefied carbon dioxide, or a part of the exhaust gas may be used in order to decrease the concentration of oxygen in the exhaust gas (and, accordingly, in the nitrogen-containing constituent). For example, a stream 45, consisting of the part of the nitrogen-containing constituent, is directed (the valve 44 is open) from the carbon dioxide separation plant 28 to the power plant 21. In the power plant 21 (for example, in the internal combustion engine 24), the part of the nitrogen-containing constituent is added to the air used as an oxidant, or to the gas-air mixture, or to both. A ratio of the air to the separated gas is maintained so as to provide the combustion of combustible substances in the separated gas and reduce the oxygen concentration in the exhaust gas. Accordingly, the compressed gas-air mixture comprises the air in an amount not less than it is theoretically necessary for oxidizing the combustible substances. And the maintenance of the desired temperature in the combustion chamber is carried out not by regulating the amount of excess air, but by adding the required amount of the nitrogen-containing constituent. A part of the carbon-dioxide-containing constituent (or a part of the liquefied carbon dioxide, or a part of the exhaust gas, or any combination thereof) may be used instead of part of the nitrogen-containing constituent for adding to the air used as an oxidant, or to the compressed gas-air mixture, or both. A device for adding the part of the nitrogen-containing constituent (or the part of the exhaust gas, or the part of the liquefied carbon dioxide, or the part of the carbon-dioxide-containing constituent, or any combination thereof) to the air (or to the compressed gas-air mixture, or to both) may be placed, for example, in the power plant 21, or, for example, may be provided in the structure of the internal combustion engine 24. For example, devices such as a mixer, a supercharger, valves or the like may be used to add the part of the nitrogen-containing constituent (or the part of the exhaust gas, or the part the liquefied carbon dioxide, or the part of the carbon-dioxide-containing constituent, or any combination thereof) to the air (or to the compressed gas-air mixture, or both) prior to the combustion.

The Methane number of the separated gas is low at the beginning of the liquefied carbon dioxide injection (that is, prior to the breakthrough of carbon dioxide into the production wells). A part of the carbon-dioxide-containing constituent (or a part of the liquefied carbon dioxide, or both) may be added to the separated gas, for example, in the power plant 21 (or, for example, in the internal combustion engine 24) in order to increase the Methane number of the separated gas prior to the breakthrough of carbon dioxide into the production wells. For this purpose, the part of the carbon-dioxide-containing constituent (or the part of the liquefied carbon dioxide, or both) may be directed (not shown in Fig. 2), for example, from the carbon dioxide separation plant 28 (or from the liquefaction device 37, or from both) to the power plant 21. Various devices may be used for adding a certain fluid (the term "a certain fluid" refers to a part of the carbon-dioxide-containing constituent, or a part of the liquefied carbon dioxide, or both) to the separated gas, or to the air used as an oxidant, or to the gas-air mixture (which comprises the air and the separated gas), or any combination thereof. For example, devices such as a mixer, a supercharger, valves or the like may be used to add the part of the carbon-dioxide-containing constituent (or the part of the liquefied carbon dioxide, or both) to the separated gas (or to the air used as an oxidant, or to the compressed gas-air mixture, or any combination thereof) prior to the combustion.

Water is injected into the hydrocarbon-bearing formation 8 through the injection well 46 as follows. The water intended for injection into the hydrocarbon-bearing formation 8 is passed to the device 47 for injecting water, wherein the device 47 for injecting water is configured for injecting water into the hydrocarbon-bearing formation 8 through the injection well 46. The device 47 for injecting water comprises a pump (or a pump-and-compressor plant) that injects water into the hydrocarbon-bearing formation 8 through the injection well 46. Depending on geological-and-physical formation characteristics, the water before being injected into the hydrocarbon-bearing formation 8 may be heated, for example, in a heating device, or in a waste-heat boiler, or in a heat exchanger of a cooling apparatus (not shown in Fig. 2). At least a part of heat (thermal energy) may be transferred from the exhaust gas to the water in the waste-heat boiler (such transferring is not shown in Fig. 2). The waste-heat boiler may be included in the structure of the power plant 21. The power plant 21 may comprise the cooling apparatus with the heat exchanger, where a part of heat (thermal energy) is transferred to the water. A part of heat (thermal energy) may be transferred from the carbon-dioxide-containing constituent to the water in the heating device (not shown in Fig. 2). The heating device may be placed, for example, in the carbon dioxide separation plant 28.

Water and the liquefied carbon dioxide may be injected into the hydrocarbon-bearing formation 8 alternatively to carry out the water-alternating-gas process. Or, water and the liquefied carbon dioxide may be injected into the hydrocarbon-bearing formation 8 simultaneously. The liquefied carbon dioxide and water may be injected into the hydrocarbon-bearing formation 8 through different injection wells, for example, the liquefied carbon dioxide may be injected through the injection well 5 and water may be injected through the injection well 46. Moreover, the liquefied carbon dioxide and water may be alternatively (or simultaneously) injected into the hydrocarbon-bearing formation 8 through the same injection well (not shown in Fig. 2).

**Example.** A hydrocarbon-containing fluid is recovered from an oil-bearing formation. The gas (associated gas) is separated from the hydrocarbon-containing fluid. The associated gas in the amount of 1700 m³/h is supplied to three power plants, each of which comprises a gas engine and an electric generator. The associated gas is combusted with air in the gas engines, each of which is configured to operate by combusting the associated gas. The gas engines drive the electric generators to generate electrical energy. The power plants comprise heat exchangers for generating thermal energy (heat).

An exhaust gas of the gas engines is passes to a carbon dioxide separation plant, in which a carbon-dioxide-containing constituent of the exhaust gas is recovered from the exhaust gas. The carbon dioxide separation plant comprises a heat exchanger for generating thermal energy (heat).

At least a part of the carbon-dioxide-containing constituent is liquefied in a liquefaction device to produce liquefied carbon dioxide. The liquefied carbon dioxide is injected into the oil-bearing formation through injection wells using an injection device.

After the breakthrough of carbon dioxide to production wells, a composition of the associated gas is as follows: methane 49 %, ethane 11.9 %, propane 7 %, butane 2.1 %, carbon dioxide 30 %. The Methane number of this associated gas exceeds the minimum allowable value, which is equal to 52, for a gas engine (see Ivanov S. S., Tarasov M. Yu. Requirements for the associated gas treatment for gas-fuelled piston engines supply. Neftianoye khozyastvo, No. 1, p.p. 102-105).

The electric power generated by the power plants is about 5.5 MW, of which 0.5 MW is consumed in the liquefaction device and the injection device.

The generated thermal power is about 5.7 Gcal/h, of which 1.8 Gcal/h is consumed in the carbon dioxide separation plant during the recovery of the carbon-dioxide-containing constituent from the exhaust gas.

The liquefied carbon dioxide is produced in the amount of about 3800 kg/h (process losses are taken into account). The liquefied carbon dioxide comprises about 99.5 % of carbon dioxide.

A pressure of the liquefied carbon dioxide in the injection device is established at about 30 MPa when carrying out the injection of the liquefied carbon dioxide into the oil-bearing formation through the injection wells.

Many modification and variations of the invention embodiments are possible based on disclosed embodiments, materials and structures without departing from their essence and scope of the invention. Accordingly, the scope of the claims and functional equivalents should not be limited by the particular embodiments that are disclosed and shown in the description and the Figures, since these embodiments are represented as examples.

## Claims

1. A system for recovery of a hydrocarbon-containing fluid from a hydrocarbon-bearing formation, the system comprising:
a power plant comprising an internal combustion engine configured to receive a gas separated from the hydrocarbon-containing fluid, wherein the internal combustion engine is configured to operate by combusting said separated gas with air and configured to produce a compressed gas-air mixture comprising said separated gas and said air, and wherein the internal combustion engine is configured to produce said compressed gas-air mixture prior to said combustion and configured to discharge an exhaust gas;
a carbon dioxide separation plant configured to recover a carbon-dioxide-containing constituent of the exhaust gas from the exhaust gas;
a liquefaction device configured to liquefy at least a part of the carbon-dioxide-containing constituent so as to produce liquefied carbon dioxide; and
an injection device configured to inject the liquefied carbon dioxide into the hydrocarbon-bearing formation through at least one well.

2. The system of claim 1, wherein at least one said well is an injection well or a production well, and wherein the injection device comprises: an injection pump for pumping the liquefied carbon dioxide; or a storage tank for storing the liquefied carbon dioxide; or a fitting; or a pipe; or a tubing string; or any combination thereof.

3. The system of claim 1, wherein the liquefaction device comprises: a compressor; or a condenser; or both; wherein said compressor is configured to compress the carbon-dioxide-containing constituent, and wherein said condenser is configured to cool the carbon-dioxide-containing constituent.

4. The system of any of claims 1, 2, or 3, further comprising at least one of the following devices: a drying device; a feeding pump; a tank for storing the liquefied carbon dioxide; wherein said drying device is configured to remove water from the carbon-dioxide-containing constituent prior to said producing of the liquefied carbon dioxide, and wherein said feeding pump is configured to pump the liquefied carbon dioxide.

5. The system of claim 1, wherein the carbon dioxide separation plant comprises an absorber and a desorber, wherein the carbon dioxide separation plant is configured to absorb the carbon-dioxide-containing constituent from the exhaust gas by an absorbent solution in the absorber so as to form a carbon-dioxide-enriched solution, and wherein the carbon dioxide separation plant is configured to desorb the carbon-dioxide-containing constituent from the carbon-dioxide-enriched solution in the desorber.

6. The system of claims 1 or 5, wherein the carbon dioxide separation plant is configured to produce a nitrogen-containing constituent of the exhaust gas during said recovery of the carbon-dioxide-containing constituent.

7. The system of claim 1, wherein the internal combustion engine is configured for maintaining a ratio of said air to combustible substances in said compressed gas-air mixture so that said compressed gas-air mixture comprises said air in an amount not less than it is theoretically necessary for oxidizing the combustible substances, and the system further comprises a device for adding a part of the exhaust gas to said air, or to said compressed gas-air mixture, or to both.

8. The system of claim 1, wherein the internal combustion engine is configured to receive said separated gas from a separator configured for receiving the hydrocarbon-containing fluid from the hydrocarbon-bearing formation through at least one production well, wherein the separator is configured to discharge said separated gas.

9. The system of claim 6, wherein the internal combustion engine is configured for maintaining a ratio of said air to combustible substances in said compressed gas-air mixture so that said compressed gas-air mixture comprises said air in an amount not less than it is theoretically necessary for oxidizing the combustible substances, and the system further comprises a device for adding a part of the nitrogen-containing constituent to said air, or to said compressed gas-air mixture, or to both.

10. The system of claim 6, wherein: at least one said well is an injection well; the injection device is configured for injecting the liquefied carbon dioxide into the hydrocarbon-bearing formation through at least one said injection well so as to form a carbon dioxide slug in the hydrocarbon-bearing formation; and the system further comprises a compressor device, wherein said compressor device is configured to inject the nitrogen-containing constituent into the hydrocarbon-bearing formation through at least one said injection well for advancing the carbon dioxide slug to at least one production well.

11. The system of claim 5, wherein the carbon dioxide separation plant comprises: a heating device; or a reboiler; or both; wherein the desorber and the reboiler are configured to transfer at least a part of heat from the exhaust gas to the carbon-dioxide-enriched solution for heating the carbon-dioxide-enriched solution, and wherein the heating device is configured to transfer at least a part of heat from the carbon-dioxide-containing constituent to water after said desorption of the carbon-dioxide-containing constituent, and the heating device is configured to supply the water to a device for injecting the water into the hydrocarbon-bearing formation through at least one injection well.

12. The system of claim 1, wherein the carbon dioxide separation plant and the liquefaction device are configured to carry out said liquefaction during said recovery of the carbon-dioxide-containing constituent.

13. The system of claim 1, further comprising a purification unit, wherein said purification unit comprises at least one of the following devices: a device for removing soot from the exhaust gas; a device for removing solid particles from the exhaust gas; a device for removing water from the exhaust gas; a device for removing nitrogen oxides from the exhaust gas; a device for removing unburned hydrocarbons from the exhaust gas; a device for removing oxygen from the exhaust gas; a device for removing carbon monoxide from the exhaust gas; a device for cooling the exhaust gas.

14. The system of claim 1, further comprising a device for injecting water into the hydrocarbon-bearing formation through at least one injection well.

15. The system of claim 1, further comprising a gas-preparing unit configured for receiving said separated gas from a separator configured for discharging said separated gas and for receiving the hydrocarbon-containing fluid from the hydrocarbon-bearing formation through at least one production well, wherein said gas-preparing unit is configured to supply said separated gas to the internal combustion engine, and wherein said gas-preparing unit comprises at least one of the following devices: a device for removing at least one sulfur-containing substance from said separated gas; a device for removing solid particles from said separated gas; a device for removing water from said separated gas; a device for removing at least a part of heavy hydrocarbons from said separated gas; a device for removing a part of carbon dioxide from said separated gas; a device for heating said separated gas.

16. The system of claim 15, further comprising a device for adding an additional fluid to the carbon-dioxide-containing constituent, or to the liquefied carbon dioxide, or to both, wherein said additional fluid is the heavy hydrocarbons, or the carbon dioxide, or both.

17. The system of claim 1, wherein the internal combustion engine is configured to drive a selected device, and the system further comprises said selected device, wherein said selected device is an electric generator, or a pump, or a compressor.

18. The system of claim 1, further comprising a device for adding a certain fluid to said separated gas, or to said air, or to said compressed gas-air mixture, or to any combination thereof, wherein said certain fluid is a part of the carbon-dioxide-containing constituent, or a part of the liquefied carbon dioxide, or both.

19. The system of claim 1, further comprising a thermo-regulating device, wherein said thermo-regulating device is configured for establishing a desired temperature of the liquefied carbon dioxide after said liquefaction or during said liquefaction.

20. The system of claim 1, wherein the power plant comprises: a waste-heat boiler; or a cooling apparatus having a heat exchanger; or both; wherein said waste-heat boiler is configured to transfer at least a part of heat from the exhaust gas to water and configured to supply the water to a device for injecting the water into the hydrocarbon-bearing formation through at least one injection well, and wherein said heat exchanger is configured to transfer at least a part of heat from the cooling apparatus to water and configured to supply the water to a device for injecting the water into the hydrocarbon-bearing formation through at least one injection well.

21. The system of any of claims 1 to 3, 5, or 7 to 20, wherein the internal combustion engine is a gas engine or a gas turbine engine.
